# EUROPEAN PATENT APPLICATION

(11) **EP 3 306 119 A1**
(43) Date of publication of application: **11.04.2018**
(21) Application number: 16803243.1
(22) Date of filing: 27.05.2016
(51) Int. Cl.: F16C 9/02, F01M 1/06, F16C 9/04, F16C 17/04, F16C 33/20

(54) **SLIDING MEMBER FOR INTERNAL COMBUSTION ENGINE**

(30) Priority: 01.06.2015 JP 2015111761
(71) Applicant: Taiho Kogyo Co., Ltd, Toyota-shi Aichi 471-8502 (JP)
(72) Inventor: UEDA, Tatehito, Toyota-shi Aichi 471-8502 (JP)
(74) Representative: Bandpay & Greuter
(86) International application number: PCT/JP2016/065708
(87) International publication number: WO 2016/194808

(57) **Abstract**

A crank washer (30) is a ring-shaped flat plate that has a protruding portion on the lower side, and is divided into an upper washer (31) and a lower washer (32) at a plane passing through the center of the ring. Two crank washers (30) are provided as a set and are attached so as to sandwich a main bearing therebetween in a state where the surfaces thereof on the side opposite to sliding surfaces are arranged facing each other. The lower washer (32) has the same configuration as the upper washer (31), with the exception of having a rotation preventer. The rotation preventer engages with a rotation prevention groove provided in the housing and prevents the lower washer (32) from rotating along with rotation of the crankshaft. Mating surface reliefs prevent mating surfaces of the lower washer (32) and the upper washer (31) from coming into contact with a shaft during attachment. The sliding surface (320) is the surface that slides over the crankshaft, and is the portion that receives a thrust load and supports the crankshaft. The crank washer (30) is entirely made of a resin.

## Description

### Technical Field

The present invention relates to a sliding member for use in an internal combustion engine of an automobile or the like.

### Background Art

A bearing that employs bimetal, which has a lining layer made of a copper-based or an aluminum-based bearing alloy on a metal backing made of steel or the like, is known as a so-called main bearing or connecting rod bearing used in an internal combustion engine (engine) of an automobile or the like (e.g., see Patent Document 1). Also, although not for use in an internal combustion engine, a bearing made of resin is known as a bearing for use in office equipment or the like (e.g., see Patent Document 2 and 3). Also, a thrust washer described in Patent Document 4 is known as an example of a sliding member for an internal combustion engine.

### Citation List

### Patent Document

Patent Document 1: JP 2013-167280A
Patent Document 2: JP 2008-19880A
Patent Document 3: JP 2000-87954A
Patent Document 4: JP 2004-19800A

### Summary

### Technical Problem

One characteristic that is desired for an internal combustion engine in an automobile is an increase in the speed of rise in lubricant temperature during cold starting, or in other words an improvement in the so-called high warm-up characteristic. However, when using a bearing made of metal as described in Patent Document 1, heat escapes from the lubricant via the bearing due to the relatively high thermal conductivity thereof, and there has been a problem in that the temperature of the lubricant does not rise easily. The bearings described in Patent Document 2 and 3 are used in a non-lubricated environment such as in office equipment, and have had the problem of not being able to be used as bearings for an internal combustion engine that are used along with a lubricant.

In view of this, the present invention relates to technology for improving the warm-up characteristic with a sliding member for an internal combustion engine.

### Solution to Problem

One aspect of the present invention provides an internal combustion engine sliding member including, a bearing main body that is formed from a resin, has a semicircular tube shape or a circular tube shape, and has an inner circumferential surface that is to slide over an opposing shaft and an outer circumferential surface that is to come into contact with a housing; and a first washer that is formed from a resin and has a half ring shape, is provided at one end of the bearing main body in an axial direction, and has a first thrust surface that receives a load in the axial direction.

The first washer may be formed integrally with the bearing main body.

The first washer may be fixed to the bearing main body.

The first washer may be relatively rotatably attached to the bearing main body.

This internal combustion engine sliding member may include a second washer that is provided at another end of the bearing main body and has a second thrust surface that receives a load in the axial direction.

This internal combustion engine sliding member may include an oil groove formed in the first thrust surface.

The present invention provides an internal combustion engine sliding member including: a washer that is formed from a resin and has a half ring shape, sandwiches a bearing main body from two end sides in an axial direction of an opposing shaft, slides over the opposing shaft with a sliding surface provided on a side opposite to the bearing main body, and supports force in the axial direction, the bearing main body being formed from a resin, having a semicircular tube shape or a circular tube shape, and having an inner circumferential surface that is to slide over the opposing shaft and an outer circumferential surface that is to come into contact with a housing.

Also, the present invention provides an internal combustion engine sliding member including: a flanged bearing that is formed from a resin, has a semicircular tube shape or a circular tube shape, has an inner circumferential surface that is to slide over an opposing shaft and an outer circumferential surface that is to come into contact with a housing, and is provided with a flange portion that protrudes in a radiating direction at each of two ends in an axial direction of the opposing shaft and has a sliding surface that is to slide over the opposing shaft.

Also, the present invention provides an internal combustion engine sliding member including: two washers that are formed from a resin and have a half ring shape; and a bearing main body that is formed from a resin, has a semicircular tube shape, and has an inner circumferential surface that is to slide over an opposing shaft and an outer circumferential surface that is to come into contact with a housing, wherein the bearing main body is relatively rotatably attached to and sandwiched by the two washers from two end sides in an axial direction of the opposing shaft, and the washers are each provided with a sliding surface on a side opposite to the bearing main body, slide over the opposing shaft with the sliding surface, and support force in the axial direction.

An oil groove may be formed in the sliding surfaces.

### Advantageous Effects

According to the present invention, it is possible to improve the warm-up characteristic with a sliding member for an internal combustion engine.

### Brief Description of Drawings

FIG. 1 is a diagram illustrating crankshaft 1 in an internal combustion engine.
FIG. 2 is a diagram illustrating an external view of main bearing 10.
FIG. 3 is a diagram illustrating an external view of semicircular tube-shaped bearing 11.
FIG. 4 is a diagram illustrating a cross-sectional structure of semicircular tube-shaped bearing 11.
FIG. 5 is a diagram illustrating a crush relief.
FIG. 6 is a diagram illustrating a cross-sectional structure of oil groove 116 and oil hole 117.
FIG. 7 is a diagram illustrating fine grooves 118 formed in inner circumferential surface 112.
FIG. 8 is a diagram illustrating an external view of crank washer 30.
FIG. 9 is a diagram illustrating lower washer 32 that constitutes crank washer 30.
FIG. 10 is a flowchart showing a bearing manufacturing method according to a second example.
FIG. 11 is a diagram illustrating manufacturing steps according to the second example.
FIG. 14 is a flowchart showing a method of molding resin by sheet forming.

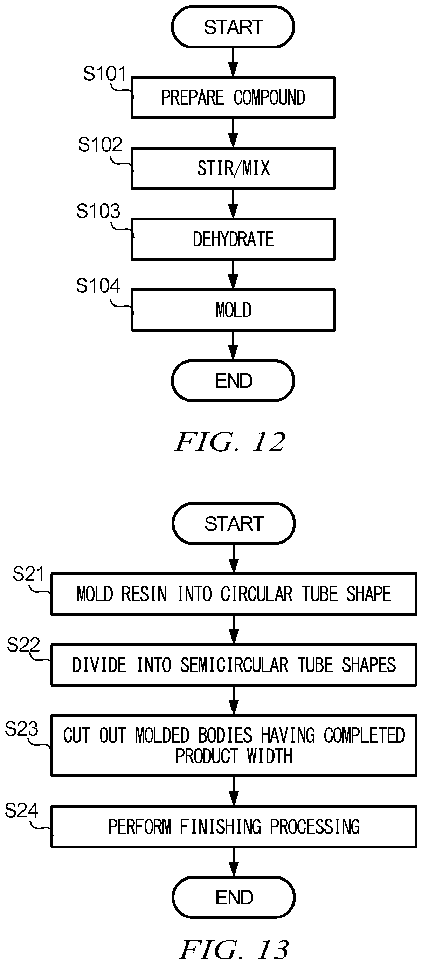

FIG. 13 is a flowchart showing a bearing manufacturing method according to a third example.

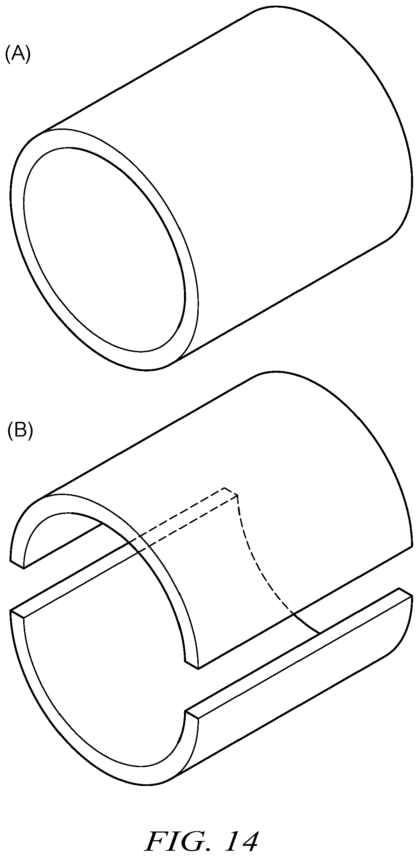

FIG. 14 is a diagram illustrating manufacturing steps according to the third example.

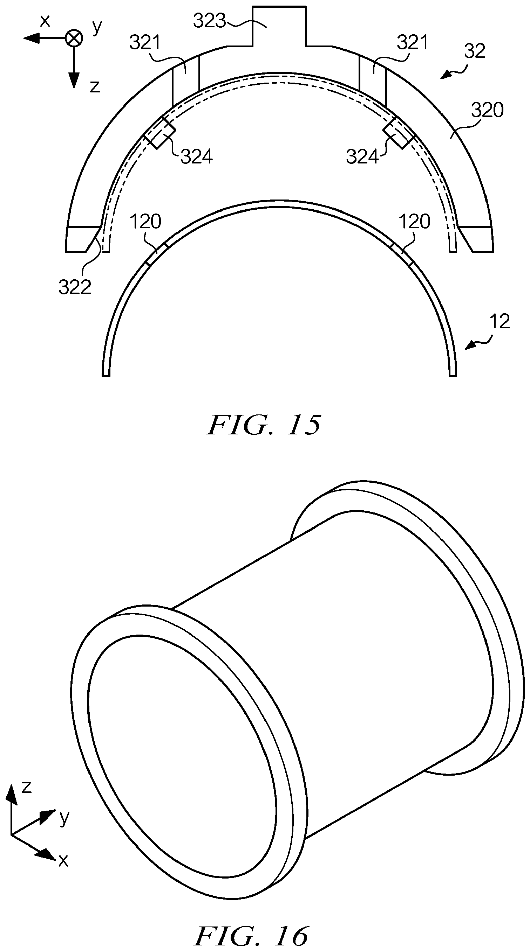

FIG. 15 is a diagram showing coupling members by which upper washer 31 is coupled to semicircular tube-shaped bearing 11.
FIG. 16 is a schematic diagram showing an external view of a flanged bearing.

### Reference Signs List

- 1: Crankshaft
- 2: Connecting rod
- 10: Main bearing
- 11: Semicircular tube-shaped bearing
110 Notch
111 Bearing main body
1111 Reinforcing layer
1112 Resin layer
112 Inner circumferential surface
113 Outer circumferential surface
114 Mating surface
115 Mating surface
116 Oil groove
117 Oil hole
118 Fine groove
119 Claw
- 12: Semicircular tube-shaped bearing
- 20: Connecting rod bearing
- 30: Crank washer
31 Upper washer
32 Lower washer
320 Sliding surface
321 Oil groove
322 Mating surface relief
323 Rotation preventer
324 Claw

### Description of Embodiments

### 1. Structure

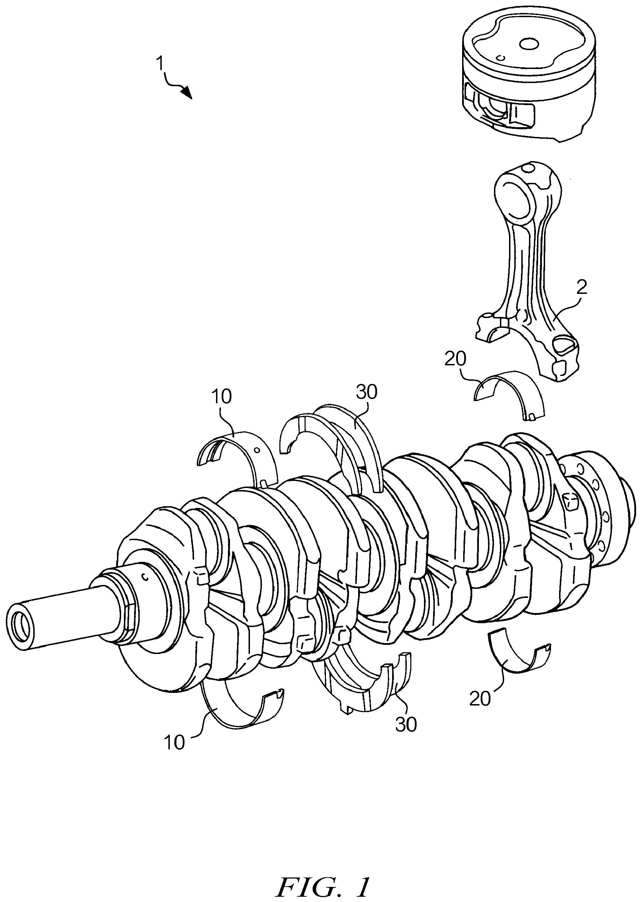

FIG. 1 is a diagram illustrating crankshaft 1 in an internal combustion engine. Crankshaft 1 includes main bearing 10, connecting rod bearing 20, and crank washer 30. Main bearing 10 is a bearing that is attached to the housing (not shown) of a cylinder block (not shown), grips a journal of crankshaft 1, and supports crankshaft 1. Connecting rod bearing 20 is a bearing that is attached to connecting rod 2, grips a pin of crankshaft 1, and supports connecting rod 2. Crank washer 30 is a bearing that is used in combination with main bearing 10 and supports force in the axial direction of crankshaft 1. Crank washer 30 also has a function of positioning crankshaft 1 and the cylinder block in the axial direction.

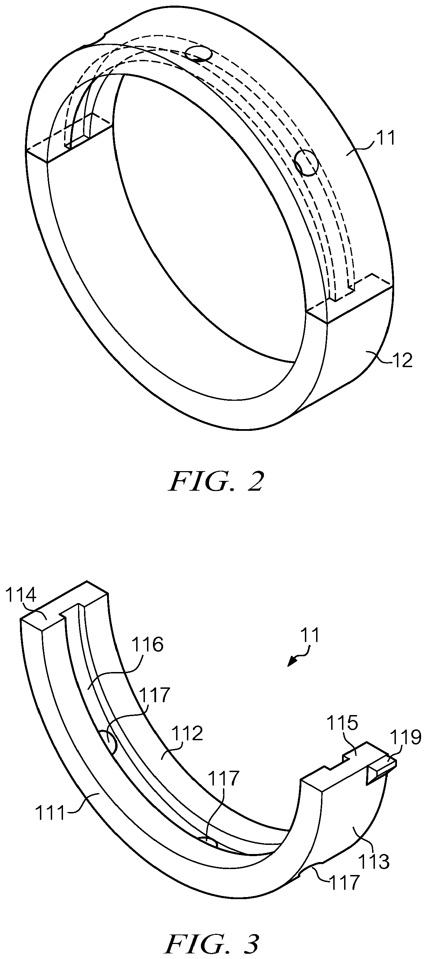

FIG. 2 is a diagram illustrating an external view of main bearing 10. Main bearing 10 is constituted by two semicircular tube-shaped bearings (semicircular tube-shaped bearing 11 and semicircular tube-shaped bearing 12). Semicircular tube-shaped bearing 11 is a bearing (upper bearing) that is attached on the piston side in a view from crankshaft 1, and semicircular tube-shaped bearing 12 is a bearing (lower bearing) that is attached on the opposite side. Semicircular tube-shaped bearing 11 and semicircular tube-shaped bearing 12 are examples of an internal combustion engine bearing according to the present invention.

FIG. 3 is a diagram illustrating an external view of semicircular tube-shaped bearing 11. Semicircular tube-shaped bearing 11 has bearing main body 111. In this example, bearing main body 111 is entirely made of a resin. A thermosetting resin or a thermoplastic resin is used as the resin.

Examples of the thermosetting resin include thermosetting polyimide resin (PI), phenol resin (PF), urea resin(UF), melamine resin (MF), epoxy resin (EP), furan resin (FF), xylene resin (XF), alkyd resin (UP), silicone resin (SI), allyl resin (PDAP), and a material obtained by mixing fibers (glass fibers or carbon fibers) in these types of resin (so-called fiber-reinforced plastic (fiber reinforced resin), FRP).

Examples of the thermoplastic resin include polyvinyl chloride resin (PVC), polyvinylidene chloride resin (PVdC), polyvinyl alcohol resin (PVA), polystyrene resin (PS), acrylonitrile styrene resin (AS), acrylonitrile-butadiene-styrene resin (ABS), polyethylene resin (PE), ethylene vinyl acetate copolymer resin (EVA), polypropylene resin (PP), polyacetal resin (POM), polymethylmethacrylate resin (PMMA), modified acrylic resin (MS), cellulose acetate resin (CA), polycarbonate resin (PC), polyester resin (PET, PTT, PBT, PEN, PBN), polyamide resin (PA), polyurethane resin (PU), fluoric resin (PTFE, FEP, PFA, etc.), polyamide-imide resin (PAI), polyphenylene sulfide (PPS), polyetheretherketone (PEEK), thermoplastic polyimide (TPI), polybenzimidazole (PBI), polyetherimide resin (PEI), polysulfone resin (PSF), polyethersulfone resin (PES), and polyarylate resin (PAR).

Due to being used in an internal combustion engine, the heat resistant temperature (e.g., continuous use temperature) of the resin is preferable greater than or equal to 180°C, and more preferably greater than or equal to 200°C. Also, from the viewpoint of improving the warm-up characteristic, the thermal conductivity of the resin is preferably less than or equal to 1 W/mK, and more preferably less than or equal to 0.5 W/mK. Also, in order to avoid adverse effects caused by moisture absorption, such as change in dimensions, the moisture absorption of the resin is preferably less than or equal to 0.2%. In the case of thermoplastic resin in particular, there is a problem that the glass transition point decreases due to moisture absorption, and therefore the moisture absorption is preferably less than or equal to 0.2%. Furthermore, from the viewpoint of suppressing expansion in the cylinder block, the coefficient of linear expansion of the resin is preferably less than or equal to 70×10⁻⁶.

Bearing main body 111 is entirely made of a resin, and therefore compared to the case where the bearing main body is made of a metal, heat less easily escapes from the lubricant to the housing via the bearing, and it is possible to improve the speed of rise in the lubricant temperature when the engine is cold started.

Bearing main body 111 is molded with a semicircular tube shape, and has inner circumferential surface 112 (sliding surface) that slides over crankshaft 1, and outer circumferential surface 113 that is in contact with the housing (not shown). The diameter ϕ of crankshaft 1 is 30 to 150 mm for example, and bearing main body 111 has an inner diameter that conforms to the diameter of crankshaft 1. Furthermore, bearing main body 111 has mating surface 114 and mating surface 115 that are in contact with semicircular tube-shaped bearing 12.

In this example, semicircular tube-shaped bearing 11 has oil groove 116 in inner circumferential surface 112. Oil groove 116 is a groove for supplying lubricant to the sliding surface and also holding supplied lubricant. Also, oil groove 116 is provided with at least one oil hole 117 that penetrates from outer circumferential surface 113 to inner circumferential surface 112. A portion of crankshaft 1 that is supported by semicircular tube-shaped bearing 11 is provided with an oil hole (not shown) at a position opposing oil groove 116. This oil hole penetrates to a portion of crankshaft 1 that is supported by connecting rod bearing 20. Lubricant is supplied to outer circumferential surface 113 of semicircular tube-shaped bearing 11 via an oil passage (not shown) that is provided in the cylinder block. Lubricant that has been supplied to outer circumferential surface 113 is supplied to inner circumferential surface 112 (sliding surface) via oil hole 117, and lubricates the main bearing. The lubricant on the sliding surface is supplied to the sliding surface of connecting rod bearing 20 via the oil hole of crankshaft 1.

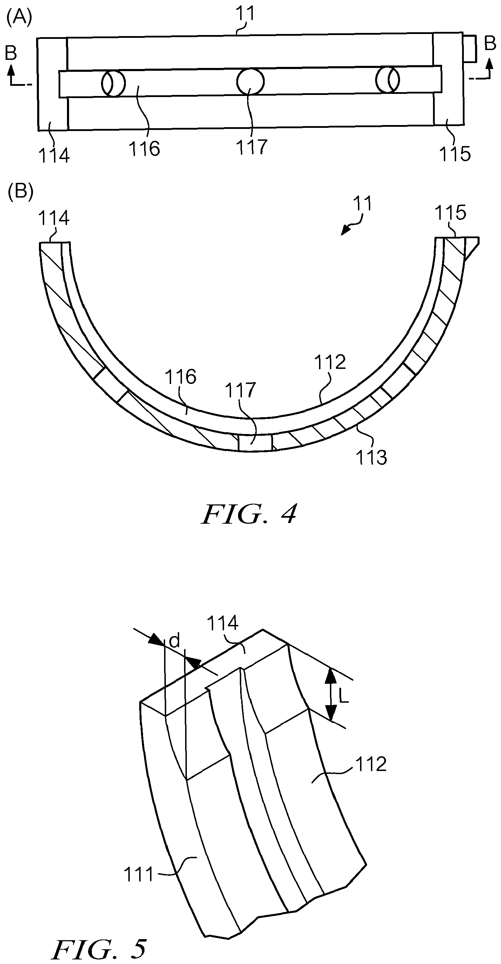

FIG. 4 is a diagram illustrating the cross-sectional structure of semicircular tube-shaped bearing 11. FIG. 4(A) is an external view of semicircular tube-shaped bearing 11 seen from a direction perpendicular to the mating surfaces. FIG. 4(B) is a cross-sectional view taken along B-B in FIG. 4(A). This cross-section is a cross-section that is perpendicular to the axial direction (a cross-section that is parallel to the sliding direction). In this example, in this cross-section, the wall thickness of bearing main body 111 is not uniform, but rather increases in thickness toward the central portion, and decreases in thickness from the central portion toward the end portions (mating surfaces). This configuration is employed such that the center of the inner diameter circle (circle described by inner circumferential surface 112) is eccentric (shifted) outward from the center of the outer diameter circle (circle described by outer circumferential surface 113). A so-called oil relief is formed by this eccentricity. Oil relief refers to the gap between the inner circumferential surface and a circle based on the central portion of the inner circumferential surface of the semicircular tube-shaped bearing (a circle that passes through the central portion of the inner circumferential surface). The depth (amount) of the oil relief is measured based on a predetermined height (e.g., 6 to 13 mm) from the mating surfaces, and is 0.005 to 0.025 mm for example. The oil relief expands the oil clearance in the vicinity of the mating surfaces, and aids the formation of wedge film pressure. Also, the oil relief furthermore aids the formation of an oil film, and cools the bearing by increasing the amount of oil.

Also, in this example, oil groove 116 is formed so as to extend the entire length in the sliding direction, from mating surface 114 to mating surface 115. The depth of the oil groove is also not uniform, but rather increases in depth toward the central portion of bearing main body 111, and decreases in depth from the central portion toward the mating surfaces.

Furthermore, bearing main body 111 is provided with a crush relief. Crush relief refers to a "relief" provided over the entire width of bearing main body 111 in portions of inner circumferential surface 112 that are adjacent to mating surface 114 and mating surface 115.

FIG. 5 is a diagram illustrating a crush relief. Note that in order to facilitate the description, the crush relief is illustrated in an exaggerated manner compared to an actual crush relief. Depth d of the crush relief is the difference between the position of inner circumferential surface 112 and a circle described by the portion of inner circumferential surface 112 other than the crush relief at the position of the mating surface, and length L of the crush relief is the length of the portion of inner circumferential surface 112 in which the crush relief is formed. Depth d of the crush relief is 0.01 to 0.06 mm for example, and length L of the crush relief is 4 to 9.5 mm for example. When the bearing is attached to the housing, even if a portion of inner circumferential surface 112 in the vicinity of a mating surface falls slightly toward the opposing shaft, the crush relief prevents contact with the shaft. The crush relief also has an effect of cooling the bearing by discharging lubricant in the vicinity of the mating surfaces, and an effect of discharging foreign matter that has penetrated to the sliding surface.

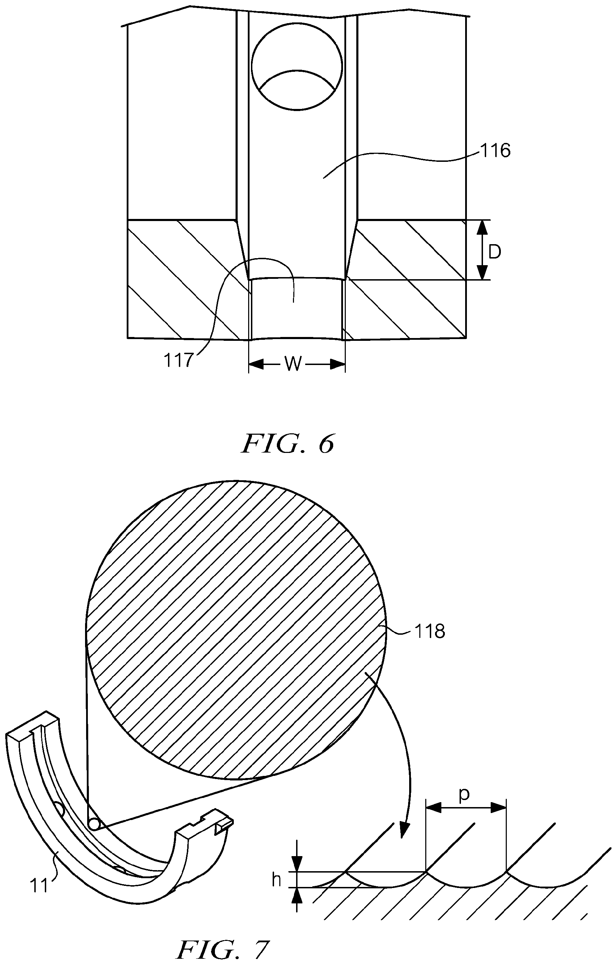

FIG. 6 is a diagram illustrating the cross-sectional structure of oil groove 116 and oil hole 117. FIG. 6 shows a cross-section that is perpendicular to the sliding direction (a cross-section that is parallel to the axial direction). In this cross-section, oil groove 116 has a trapezoid shape in which the bottom portion is narrower and the opening portion is wider. Bottom width W of oil groove 116 is 2 to 5 mm for example, and depth d of oil groove 116 is smaller than bottom width W, such as 0.5 to 1 mm.

In this example, fine grooves (microgrooves) that are finer than oil groove 116 are formed in a portion of inner circumferential surface 112 other than oil groove 116.

FIG. 7 is a diagram illustrating fine grooves 118 formed in inner circumferential surface 112. Fine grooves 118 are grooves that have a circular arc-shaped cross-section and are arranged regularly. In this example, the apex between two adjacent grooves has a sharp shape rather than being flat. The gap between two adjacent apexes is referred to as pitch P, and the depth of the grooves based on the apex is referred to as depth h. Pitch P of fine grooves 118 is larger than depth h thereof. Depth h is preferably 1 to 20 µm, and more preferably 1 to 6 µm, for example. Pitch P is preferably 0.1 to 0.4 mm, and more preferably 0.1 to 0.2 mm, for example. Fine grooves 118 shorten the time required to move from a non-lubrication state to a fluid lubrication state in a so-called Stribeck chart, thus ensuring early arrival of the fluid lubrication state and improving conformability and oil retainability.

Also, bearing main body 111 has interference (so-called crush). In other words, bearing main body 111 has a longer diameter than a semicircle.

The description will now return to FIG. 3. Semicircular tube-shaped bearing 11 has claw 119 on outer circumferential surface 113. Claw 119 is an example of a rotation prevention protrusion portion for suppressing rotation of semicircular tube-shaped bearing 11 relative to the housing. Furthermore, claw 119 has functions of preventing erroneous attachment and performing positioning in the circumferential direction and the axial direction.

Also, semicircular tube-shaped bearing 11 has so-called bulge. Bulge refers to setting the outer diameter dimension larger than the inner diameter of the housing in the free state (not attached to the housing) in a view from the axial direction. This bulge is 0.8 to 1.3 mm for example. Bulge has an effect of allowing the outer circumference of semicircular tube-shaped bearing 11 to conform to the inner circumference of the housing during attaching, and has an effect of preventing semicircular tube-shaped bearing 11 from moving away from or falling out of the housing during attachment.

A detailed description will not be given for semicircular tube-shaped bearing 12, which is the same as semicircular tube-shaped bearing 11 with the exception of not having an oil groove or an oil hole. A detailed description will not be given for connecting rod bearing 20 either, which is the same as main bearing 10 in that two semicircular tube-shaped bearings are used in a combined state. It should be noted that in connecting rod bearing 20, neither of the semicircular tube-shaped bearings has an oil groove or an oil hole. The two semicircular tube-shaped bearings of connecting rod bearing 20 are other examples of an internal combustion engine bearing according to the present invention.

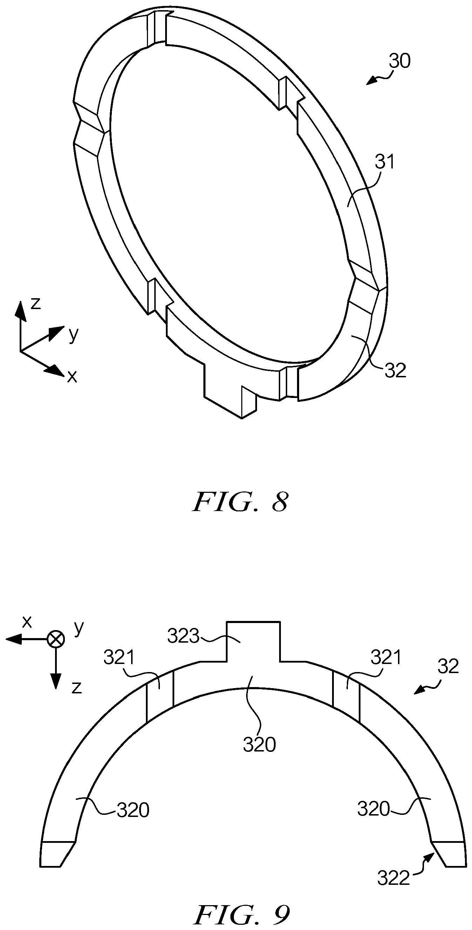

FIG. 8 is a diagram illustrating an external view of crank washer 30. FIG. 9 is a diagram illustrating lower washer 32 (described later) that constitutes crank washer 30. In FIGS. 8 and 9, the space in which crank washer 30 is arranged is expressed as an xyz right-handed coordinate space. Among the coordinate symbols shown in these figures, the symbol in which two intersecting lines are drawn in a circle indicates an arrow extending from the paper front side to the back side. In this space, the direction along the x axis is referred to as the x axis direction. Also, in the case of the x axis direction, the direction in which the x component increases is referred to as the +x direction, and the direction in which the x component decreases is referred to as the -x direction. In the case of the y and z components as well, the y axis direction, the +y direction, the -y direction, the z axis direction, the +z direction, and the -z direction are defined in accordance with the above-described definition.

Crank washer 30 is a ring-shaped flat plate that has a protruding portion on the lower side, and is divided into upper washer 31 and lower washer 32 at a plane passing through the center of the ring in the example shown in FIG. 8. In general, two crank washers 30 are provided as a set and are attached so as to sandwich the housing (not shown) therebetween in a state where the surfaces thereof on the side opposite to sliding surface 320 (described later) are arranged facing each other. Upper washer 31 (or lower washer 32) of one of the two crank washers 30 is an example of a first washer, and upper washer 31 (or lower washer 32) of the other crank washer 30 is an example of a second washer.

Lower washer 32 has the same configuration as upper washer 31, with the exception of having rotation preventer 323. Rotation preventer 323 engages with a rotation prevention groove provided in the housing (not shown) and prevents lower washer 32 from rotating along with rotation of crankshaft 1. Also, due to rotation of lower washer 32 being suppressed by engagement of rotation preventer 323 with the rotation prevention groove of the housing, rotation of upper washer 31 is also suppressed. Note that a "relief" for preventing interference with the rotation prevention groove may be provided at the base of rotation preventer 323.

As shown in FIG. 9, lower washer 32 has sliding surface 320, oil grooves 321, and mating surface reliefs 322 in addition to rotation preventer 323. Mating surface reliefs 322 are for preventing mating surfaces of lower washer 32 and upper washer 31 from coming into contact with the shaft during attachment. Note that mating surface reliefs 322 are provided so as to decrease in thickness in the +x direction and the -x direction, in the direction of radiation from the axis of the crankshaft 1, and may be provided so as to decrease in thickness in the +y direction as well, as shown in FIGS. 8 and 9.

Sliding surface 320 is the surface that slides over crankshaft 1, and is a portion (thrust surface) that receives a thrust load and supports crankshaft 1. The sliding surface of upper washer 31 or lower washer 32 corresponding to the first washer is an example of the first thrust surface, and the sliding surface of upper washer 31 or lower washer 32 corresponding to the second washer is an example of the second thrust surface. Note that the fine grooves shown in FIG. 7 may be provided in sliding surface 320. Oil grooves 321 function as passages for lubricant being supplied to sliding surface 320. Note that upper washer 31 has the same structure as lower washer 32, with the exception of not having a rotation preventer that corresponds to rotation preventer 323 of lower washer 32.

Upper washer 31 and lower washer 32 of each crank washer 30 are both entirely made of a resin. For this reason, compared to the case where the crank washers are made of a metal, heat less easily escapes from the lubricant to the housing via the crank washers, and it is possible to improve the speed of rise in the lubricant temperature when the engine is cold started.

### 2. Manufacturing method

Several methods can be applied as methods for manufacturing sliding members such as main bearing 10, connecting rod bearing 20, and crank washer 30.

### 2-1. First example

In this example, sliding members such as the bearing and crank washers are molded one at a time by injection molding, compression molding, or the like. The oil grooves, oil holes, and fine grooves may be molded by forming oil grooves, oil holes, and fine grooves in the mold in advance, or may be formed by performing cutting or the like after molding into a semicircular tube shape or a ring shape (in the case of having a rotation preventer, the ring shape may be a ring shape having a protruding portion).

### 2-2. Second example

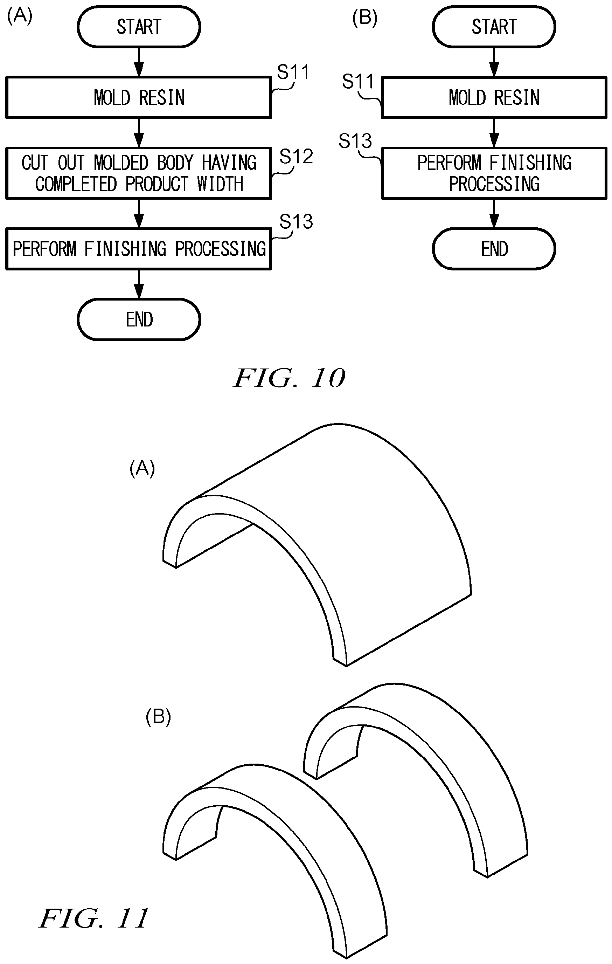

FIG. 10 is a flowchart showing a sliding member manufacturing method according to a second example, and FIG. 11 is a diagram illustrating manufacturing steps.

In step S11 shown in FIG. 10(A), resin is molded into a predetermined shape, such as a semicircular tube shape or a ring shape. FIG. 11(A) illustrates a resin molded body that was molded into a semicircular tube shape in step S11. The semicircular tube shape referred to here is a shape in which the length in the axial direction is longer than the width of the completed bearing. This molding is performed by injection molding, compression molding, or the like.

In step S12 in FIG. 10(A), molded bodies having the width of the completed product are cut from the resin molded body. FIG. 11(B) illustrates the cut molded bodies.

In step S13 shown in FIG. 10(A), necessary finishing processing and the like are carried out on the molded bodies. The finishing processing referred to here includes oil groove formation, oil hole formation, fine groove formation, and chamfering, for example.

Note that if resin is molded into a semicircular tube shape with the width of the completed bearing in step S11 for example, step S12 shown in FIG. 10(A) may be omitted. The flowchart shown in FIG. 10(B) shows the sliding member manufacturing method in this case. Here, in the case of performing resin injection molding for example, if a mold with an interior space designed with the size of the completed product is used, the cutting performed after molding may be omitted. Also, in the case of forming upper washer 31 or lower washer 32 that constitute crank washer 30 for example, if resin is formed into the shape of a halved ring (called a half ring shape) rather than a ring shape in step S11, there is no need to divide the resin molded body in half in step S12.

Also, besides injection molding and compression molding, the molding in step S11 may be sheet forming. Here, "sheet forming" is a solid member manufacturing method that has a step in which a material containing resin is stirred in water to produce a slurry, a step in which the produced slurry is dehydrated, and a step in which the dehydrated slurry is molded by being pressed and heated in a mold.

FIG. 12 is a flowchart showing a method of molding resin by sheet forming. In step S101 shown in FIG. 12, a material containing resin is prepared as a compound. This material contains a thermosetting resin or a thermoplastic resin, as well as glass fibers, carbon fibers, inorganic fibers, an inorganic filler, a friction adjusting material, or the like.

In step S102, the above-described material is introduced into water and stirred or mixed to produce a slurry.

In step S103, the above-described slurry is supplied to a filter and dehydrated. Suction filtration, pressure filtration, or the like is applied as dehydration.

In step S104, the above-described dehydrated slurry is supplied to a mold and then pressed and heated, thus being molded into a predetermined shape, such as a semicircular tube shape or a ring shape.

When the resin molded body is molded by the sheet forming steps of step S101 to step S104 shown in FIG. 12, the material is more readily distributed evenly than in the case where another process is applied. Also, in the case where the material contains fibers, the fibers are not likely to be aligned in a specific direction, thus making it possible to give isotropy to the strength of the resin molded body, and to improve the strength.

### 2-3. Third example

FIG. 13 is a flowchart showing a bearing manufacturing method according to a third example, and FIG. 14 is a diagram illustrating manufacturing steps.

In step S21, resin is molded into a circular tube shape. FIG. 14(A) illustrates a resin molded body that is obtained in step S21. The circular tube shape referred to here is a shape in which the length in the axial direction is longer than the width of the completed bearing. This molding is performed by injection molding, compression molding, or the like.

In step S22, the circular tube-shaped resin molded body is bisected by performing cutting in the axial direction. Two semicircular tube-shaped resin molded bodies are obtained. FIG. 14(B) illustrates resin molded bodies that are obtained in step S22. Thereafter, the step in which a molded body having the width of the completed bearing is cut from the semicircular tube-shaped resin molded body (step S23) and the finishing processing (step S24) are similar to steps S12 and S13.

Note that similarly to the second example described above, if resin is molded into a circular tube shape having the width of the completed bearing in step S21 in FIG. 13, step S23 shown in FIG. 13 may be omitted.

Also, the molding in step S21 of FIG. 13 may be performed by sheet forming, similarly to the second example.

### 3. Variations

The present invention is not limited to the embodiment described above, and various modifications can be carried out. The following describes several variations. Two or more of the following variations may be used in combination.

The specific shape of the bearing is not limited to the shape illustrated in the embodiment. For example, at least one of the oil grooves, the oil holes, the fine grooves, the oil relief, the crush relief, the mating surface relief, the rotation preventer, and the claw may be omitted. Alternatively, at least one of an oil groove and oil holes may be provided in semicircular tube-shaped bearing 12 and connecting rod bearing 20. Also, the specific sizes of these elements are not limited to the sizes illustrated in the embodiment. Moreover, the specific shapes, number of, and positions of the oil groove and the oil holes are not limited to those illustrated in the embodiment. Furthermore, the semicircular tube-shaped bearing is not required to have a bulge.

In the embodiment, an example is described in which oil groove 116 extends from mating surface 114 to mating surface 115. However, the oil groove may be formed in only a portion in the circumferential direction. Also, the oil groove is not limited to being formed in the sliding surface (inner circumferential surface), and may be formed in the outer circumferential surface. In other words, it is sufficient that the oil groove is formed in at least one of the inner circumferential surface and the outer circumferential surface of the bearing main body.

Also, in the embodiment, an example is described in which a set of two crank washers 30 are attached sandwiching the housing, but the set of crank washers 30 may be attached sandwiching main bearing 10. In this case, crank washers 30 may be fixed to main bearing 10, or may be relatively rotatably coupled thereto. The attached crank washers 30 and main bearing 10 may all be made of a resin, or either may be made of a resin.

FIG. 15 is a diagram showing coupling members by which lower washer 32 is relatively rotatably coupled to semicircular tube-shaped bearing 12. Lower washer 32 is provided with sliding surfaces 320, oil grooves 321, and mating surface reliefs 322, and is further provided with claw 324 at multiple locations. Semicircular tube-shaped bearing 11 is provided with multiple notches 120 at positions opposing claws 324. When claws 324 are crimp-engaged with notches 120, lower washer 32 is attached to semicircular tube-shaped bearing 12. Notch 130 may be provided in the two ends of semicircular tube-shaped bearing 12 in the axial direction. In this case, two upper washers 32 may be attached sandwiching semicircular tube-shaped bearing 12 from the two end sides in the axial direction.

Lower washer 32 is attached such that sliding surface 320 is on the side opposite to semicircular tube-shaped bearing 12, and therefore when crankshaft 1 is housed on the inner circumferential surface side of semicircular tube-shaped bearing 12, sliding surface 320 of lower washer 32 slides over a crank portion of crankshaft 1.

Notch 120 referred to here may be provided such that the opening portion thereof is narrower than the width of claw 324, and such that the interior space thereof is wider than the width of claw 324. Accordingly, when engaged with notch 120, claw 324 is coupled so as to be restricted by the opening portion and also be relatively rotatable within the range of the interior space of notch 120. According to this configuration, tolerance in attachment is absorbed.

Also, the set of crank washers 30 and main bearing 10 may be a member that is formed integrally, that is to say may be a flanged bearing in which flanges corresponding to crank washers 30 are provided on respective end portions of main bearing 10 in the axial direction. FIG. 16 is a schematic diagram showing an external view of this flanged bearing. In this case, it is sufficient that the flanged bearing is entirely made of a resin.

## Claims

1. An internal combustion engine sliding member comprising:
a bearing main body that is formed from a resin, has a semicircular tube shape or a circular tube shape, and has an inner circumferential surface that is to slide over an opposing shaft and an outer circumferential surface that is to come into contact with a housing; and
a first washer that is formed from a resin and has a half ring shape, is provided at one end of the bearing main body in an axial direction, and has a first thrust surface that receives a load in the axial direction.

2. The internal combustion engine sliding member according to claim 1, wherein the first washer is formed integrally with the bearing main body.

3. The internal combustion engine sliding member according to claim 1, wherein the first washer is fixed to the bearing main body.

4. The internal combustion engine sliding member according to claim 1, wherein the first washer is relatively rotatably attached to the bearing main body.

5. The internal combustion engine sliding member according to any one of claims 1 to 4, comprising a second washer that is provided at another end of the bearing main body and has a second thrust surface that receives a load in the axial direction.

6. The internal combustion engine sliding member according to any one of claims 1 to 5, comprising an oil groove formed in the first thrust surface.
